# EUROPEAN PATENT APPLICATION

(11) **EP 4 640 633 A1**
(43) Date of publication of application: **29.10.2025**
(21) Application number: 23907192.1
(22) Date of filing: 22.12.2023
(51) Int. Cl.: C01F 7/027, C08L 101/00

(54) **SPHERICAL ALUMINA PARTICLES AND METHOD FOR PRODUCING SAME**

(30) Priority: 23.12.2022 JP 2022206650
(71) Applicant: NIPPON STEEL Chemical & Material Co., Ltd., Tokyo 103-0027 (JP)
(72) Inventor: AE, Masanori, Tokyo 103-0027 (JP); TANAKA, Mutsuhito, Tokyo 103-0027 (JP); MATSUKI, Asahi, Tokyo 103-0027 (JP); KATOU, Jinya, Tokyo 103-0027 (JP); NUMAO, Ryutaro, Tokyo 103-0027 (JP)
(74) Representative: Vossius & Partner Patentanwälte Rechtsanwälte mbB
(86) International application number: PCT/JP2023/046180
(87) International publication number: WO 2024/135832

(57) **Abstract**

Spherical alumina particles able to improve the thermal conductivity of resin compositions formed when kneaded with a resin and able to keep down the viscosity (raising the fluidity) and a method of production of the same, i.e., spherical alumina particles having a D50 by a laser diffraction/scattering method of 0.5 or more and 10.0 µm or less, a particle size distribution, measured by a wet sieving test method, in which 20.0 µm or more particles account for 0.04 wt% or less, a specific surface area, measured by a BET method, of 0.35 m²/g or more and 3.50 m² /g or less, a "tapped bulk density", prescribed by Japan Industrial Standard JISR1628:1997, of 1.30 g/cm³ or more and 2.50 g/cm³ or less, and a roundness of 0.90 or more and a method of production of the same.

## Description

### FIELD

The present invention relates to spherical alumina particles, in particular spherical alumina particles provided with both high thermal conductivity and fluidity and a method of production of the same.

### BACKGROUND

In recent years, due to the increasingly higher functions and higher speeds of mobile phones and other electronic equipment, the amount of heat generated from the electronic components inside electronic equipment has been increasing. For normal operation of electronic equipment, efficient dissipation of the generated heat to the outside has become an important issue. For heat dissipation, much use is made of what are called "heat dissipation sheets" and "heat dissipation adhesives." These are adhered or coated and press bonded between a heat generating body and heat dissipation fins to eliminate the gaps between the heat generating body and heat dissipation fins and enable efficient dispersion of the heat. Further, inside of the electronic components, the semiconductors themselves also remarkably generate heat due to their increasingly higher functions and speeds. A heat dissipation ability is also sought to be imparted to the sealants protecting the semiconductors.

In general, heat dissipation sheets, heat dissipation adhesives, and semiconductor sealants are comprised of a thermal conductive inorganic filler and a resin. (Such a mixture of a filler and resin may also be referred to as a "resin composition" or "resin composite composition"). As the thermal conductive inorganic filler, inexpensive aluminum hydroxide or aluminum oxide (below, "alumina"), materials from which high thermal conductivity can be expected such as silicon carbide, boron nitride, and aluminum nitride are being used. Further, as the resin, if a heat dissipation sheet or heat dissipation adhesive, a silicone resin is generally used, while for a semiconductor sealant, an epoxy resin is generally used.

Generally, a filler is higher in thermal conductivity than a resin, so as means for improving the thermal conductivity of these members, methods raising the amount of filler added to the resin aiming at increasing the thermal conductivity are being studied in numerous quarters. On the other hand, if raising the amount of filler added, it is known that inconveniences arise. First, the fluidity of the resin composition falls. Further, in semiconductor sealants, the wires connected to the semiconductors are sometimes deformed by the filler.

PTL 1 proposes using alumina powder containing predetermined alumina particles as the filler. More specifically, it is prescribed that the alumina particles have predetermined circular equivalent diameters and sphericity and that the alumina powder contain the alumina particles in a predetermined content and have predetermined particle sizes and amounts of moisture. It is described that due to this, a suitable fluidity of the resin composition is obtained and, further, deformation of wires can be suppressed at the time of sealing the semiconductor.

### [CITATIONS LIST]

### [PATENT LITERATURE]

[PTL 1] WO2021/200485

### SUMMARY

### [TECHNICAL PROBLEM]

In the above way, to improve the thermal conductivity, raising the rate of addition of an inorganic filler in the resin composition has been studied. In that case, realization of suitable fluidity has also been sought. Further, semiconductor technology is advancing day by day. Along with that, the amount of heat dissipation from semiconductors has been increasing and, further, sizes are being increasingly reduced. For this reason, as shown in PTL 1, it has been proposed to control the particle size and moisture content to obtain suitable fluidity, but materials with further higher heat dissipation ability and fluidity are being sought.

Therefore, the present invention has as its object the provision of spherical alumina particles able to improve the thermal conductivity of a resin composition formed when kneaded with a resin and able to suppress the viscosity (raise the fluidity) and a method of production of the same.

### [SOLUTION TO PROBLEM]

The present invention was made as a result of intensive studies to solve the above-mention problem and has as its gist the following content described in the claims:
[1] Spherical alumina particles having
   a D50 by a laser diffraction/scattering method of 0.5 or more and 10.0 µm or less,
   a particle size distribution, measured by a wet sieving test method, in which 20.0 µm or more particles account for 0.04 wt% or less,
   a specific surface area, measured by a BET method, of 0.35 m²/g or more and 3.50 m²/g or less,
   a "tapped bulk density," prescribed by Japan Industrial Standard JISR1628:1997, of 1.30 g/cm³ or more and 2.50 g/cm³ or less, and
   a roundness of 0.90 or more.
[2] The spherical alumina particles according to [1], wherein an α- phase ratio is 55% or less.
[3] The spherical alumina particles according to [1] or [2], wherein in the number of particles of 1 µm or more and 30 µm or less detected by a Coulter counter, a 10 µm or more particle number frequency is 20 ppm or less.
[4] The spherical alumina particles according to any one of [1] to [3], wherein an amount of moisture by the Karl Fischer coulometric method is 20 ppm or less.
[5] A resin composite composition containing spherical alumina particles according to any one of [1] to [4].
[6] The resin composite composition according to [5], further containing at least one type of inorganic filler selected from amorphous spherical alumina particles, crystalline spherical silica particles, alumina particles, titania particles, magnesia particles, aluminum nitride particles, boron nitride particles, barium titanate particles, calcium titanate particles, and carbon fiber.
[7] A method of production of spherical alumina particles having a D50 by a laser diffraction/scattering method of 0.5 or more and 10.0 µm or less, a particle size distribution, measured by a wet sieving test method, in which 20.0 µm or more particles account for 0.04 wt% or less, a specific surface area, measured by a BET method, of 0.35 m²/g or more and 3.50 m² /g or less, a "tapped bulk density", prescribed by Japan Industrial Standard JISR1628:1997, of 1.30 g/cm³ or more and 2.50 g/cm³ or less, and a roundness of 0.9 or more characterized by having a step of running at least one of alumina, boehmite, or aluminum hydroxide through a flame to make it melt, then cooling it to thereby make it spheroidal and a step of classification jointly using a precision wind classifier and sieve after the spheroidization step.

### [ADVANTAGEOUS EFFECTS OF INVENTION]

According to one embodiment of the present invention, alumina particles able to provide a heat dissipation sheet, heat dissipation adhesive, and semiconductor sealant improved in thermal conductivity and further able to keep down the viscosity of the resin composition formed when being kneaded with a resin and a method of production of the same are provided.

### DESCRIPTION OF EMBODIMENTS

The inventors engaged in intensive studies to obtain alumina particles high in thermal conductivity and excellent in fluidity (more particularly alumina particles high in thermal conductivity of a resin mixture and low in viscosity when mixed with a resin). In this, the inventors discovered that by controlling the particle size, particle size distribution, specific surface area, bulk density, and roundness of the spherical alumina particles, the thermal conductivity and fluidity become suitable ranges. Based on this discovery, the inventors completed the present invention. More specifically, the inventors controlled the particle size, particle size distribution, specific surface area, bulk density, and roundness to predetermined ranges to thereby complete the desired spherical alumina particles high in thermal conductivity and excellent in fluidity and their method of production.

The spherical alumina particles provided by one embodiment of the present invention are characterized by having
a D50 by a laser diffraction/scattering method of 0.5 or more and 10.0 µm or less,
a particle size distribution, measured by a wet sieving test method, in which 20.0 µm or more particles account for 0.04 wt% or less,
a specific surface area, measured by a BET method, of 0.35 m²/g or more and 3.50 m²/g or less,
a "tapped bulk density," prescribed by Japan Industrial Standard JISR1628:1997, of 1.30 g/cm³ or more and 2.50 g/cm³ or less, and
a roundness of 0.90 or more.

### (Average Particle Size D50 of 0.5 or More or 10.0 µm or Less)

The spherical alumina particles of one embodiment of the present invention have an average particle size of 0.5 to 10.0 µm. If the average particle size is less than 0.5 µm, the agglomeration ability of the particles becomes greater and, when used as a filler etc., the fluidity of the resin composition remarkably falls, so this is not preferred. If the average particle size is more than 10.0 µm, in the increasingly smaller and increasingly thinner semiconductor packages etc., particles end up being caught in the narrow parts between the mounting board and chip, the fluidity of the sealants becomes poorer, and sometimes the shapeability falls. It should be noted that one aspect of the present invention, as explained above, is spherical alumina particles exhibiting sufficient fluidity even in the region of a small particle size with an average particle size of 0.5 or more and 2.0 µm or less since if the average particle size becomes smaller, the fluidity of the resin composition tends to fall.

In this case, the "average particle size" indicates the average particle size (D50) and was measured by the laser diffraction/scattering type particle size distribution measurement method. In the volume based particle size distribution, it means the median size D50 with a cumulative volume of 50%. It should be noted that the laser diffraction/scattering type particle size distribution measurement method is the method of firing a laser beam at a dispersion in which spherical alumina particles are made to disperse and finding the particle size distribution from the intensity distribution pattern of the diffraction/scattering light emitted from the dispersion. In the present invention, a laser diffraction/scattering type particle size distribution measurement apparatus "Mastersizer 3000" (made by Malvern) is used. It should be noted that it is also possible to find the average particle size of the starting material of the spherical alumina particles in the same way.

### (Particle Size Distribution Measured by Wet Sieving Test Method in Which 20.0 µm or More Particles Account for 0.04 wt% or Less)

The spherical alumina particles according to one embodiment are sometimes mixed with a resin and used as a semiconductor sealant. Sealed semiconductor devices sometimes have many wires laid out in a high density. The intervals between the interconnects are sometimes narrow. If the spherical alumina particles include 20.0 µm or more particles in more than 0.04 wt% in the particle size distribution, they may not be maneuvered through the narrow intervals between the interconnects. It should be noted that the weight ratio in this case is based on the entirety, i.e., 100 wt%, of the spherical alumina particles.

Similarly, the spherical alumina particles are sometimes mixed with a resin and used in a heat dissipation sheet, heat dissipation adhesive, or other heat dissipation member. Such a heat dissipation member is sometimes used compacted by pressure etc. to facilitate transfer of heat to other members. If the spherical alumina particles have a particle size distribution in which 20.0 µm or more particles account for more than 0.04 wt%, at the time of compaction, compaction is liable to be obstructed by the 20.0 µm or more coarse particles.

Therefore, the spherical alumina particles according to the present embodiment may contain 20.0 µm or more particles in 0.04 wt% or less so as to enable narrow intervals between interconnects to be maneuvered through or so as to enable a heat dissipation member to be sufficiently compacted. Alternatively, substantially 20.0 µm or more may not be present. It should be noted that the maximum value of the particle size distribution may be suitably adjusted in accordance with the interconnect intervals or thickness compacted or other aspects of the usage environment. For example, the maximum value of the particle size distribution may also be 19.0 µm and may also be 18.0 µm. In other words, in the particle size distribution, the 19.0 µm or more particles may be 0.04 wt% or less while the 18.0 µm or more particles may be 0.04 wt% or less.

It should be noted that the "wet type particle size test method" adds 10 g of the spherical alumina particles to be tested and water to a container and uses ultrasonic waves to make the spherical particles sufficiently disperse to prepare a slurry. The slurry is transferred to the screen of a test sieve and sieved. The particles remaining on the screen of the test sieve are taken in a suitable container, a hot plate etc. is used to evaporate the sample to dryness, the weight of the residue is measured, and the ratio of the weight of the particles sieved in the 10 g of the spherical alumina particles to be tested is calculated.

### (Specific Surface Area of 0.35 m² /g or More and 3.50 m²/g or Less)

The spherical alumina particles have a specific surface area, measured by the BET method, of 0.35 m² /g or more and 3.50 m² /g or less.

If the specific surface area of the spherical particles is less than 0.35 m² /g, it becomes harder for the particles to form a close-packed structure, so sometimes the fluidity of the sealant containing the particles falls. On the other hand, if the specific surface area of the spherical particles is more than 3.50 m² /g, the tendency of the particles to agglomerate increases and similarly the fluidity of the sealant sometimes falls. The preferable upper limit is 0.90 m² /g.

The specific surface area is measured by the BET method. Typically, the following procedure is used to measure the specific surface area. About 5 g of the sample is measured out and is dried in vacuo at 250°C for 5 minutes. Next, the sample is set in an automatic specific surface area measurement apparatus (Macsorb made by Mountech) and a pure nitrogen and nitrogen-helium mixed gas (mixed ratio of nitrogen 30%, He70%) is used to measure the value of the nitrogen gas adsorption at a 77K measurement temperature and relative pressure P/P0 of 0.291. The one-point method is used to calculate the BET specific surface area.

### ("Tapped Bulk Density" of 1.30 g/cm³ or More and 2.50 g/cm³ or Less)

The spherical alumina particles of one embodiment of the present invention have a tapped bulk density of 1.30 g/cm³ or more and 2.50 g/cm³ or less. If the tapped bulk density is in the above range, the fluidity of the resin composition when mixing the spherical alumina particles with a resin becomes a preferable range. Further, the thermal conductivity of the resin composition also becomes a suitable range. The preferable lower limit is 1.80 m²/g.

The "tapped bulk density" is the bulk density when a sample is broken up and placed in a container, then the container is tapped to apply impact until the volume of the sample no longer changes and is measured based on the procedure in the Japan Industrial Standard JIS R1628:1997. More specifically, a Powder Tester PT-X made by Hosokawa Micron is used for measurement. As the measurement container, a stainless steel 50 ml container of known mass is used. First, the measurement container is packed with the powder sample until overflowing. The powder built up from the top end face of the measurement container is sliced off using a slicing plate. The mass of the container and the filled powder combined is measured and the mass of the container is subtracted from the measured mass to find the mass of the filled powder. Next, an adapter is attached to the top surface of the measurement container, then the sample is inserted until overflowing from the top surface of the adapter. The measurement container in the state with the adapter attached is placed in the tap apparatus and tapped 180 times to compact the powder. After compaction, the adapter is removed and the built up powder is sliced off from the top end face of the measurement container by a slicing plate. The mass of the container and the filled powder combined is measured and the mass of the container is subtracted from the measured mass to find the mass of the filled powder. The mass of the sample is divided by the volume of the container to find the tapped bulk density (tight bulk density). Further, the mass of the sample is divided by the volume of the measurement container (specifically, the volume of the sample before tapping) to find the poured bulk density (loose bulk density). It should be noted that the "tapped bulk density (tight bulk density)" is also called the "tap specific gravity (tapped bulk density)." The "poured bulk density (loose bulk density)" is also called the "poured bulk specific gravity (loose bulk density)."

### (Roundness of 0.90 or More)

The spherical alumina particles have a roundness of 0.90 or more. The higher the roundness of the spherical particles, the more the viscosity of the resin composite composition including the alumina particles can be lowered and the more the shapeability can be improved. The roundness may be 0.91 or more, may be 0.92 or more, may be 0.93 or more, may be 0.94 or more, and may be 0.95 or more. The upper limit of the roundness is theoretically 1.0, but from the viewpoint of production control is 0.98 or less or may be 0.97 or less.

The roundness is measured using an electron microscope or optical microscope and image analysis apparatus. For example, an FPIA made by Sysmex Corporation etc. is used. These apparatuses are used to measure the roundness of the particles (circumferential length of equivalent circle/circumferential length of projected image of particle). The roundness is measured for 100 or more particles and the average value is made the roundness of the powder.

### (α-phase Ratio of 55% or Less)

In one embodiment of the present invention, the spherical alumina particles may have an α-phase ratio of 55.0% or less. In this case, the "α- phase ratio" indicates the ratio of the α-alumina crystals in the crystalline phase. The spherical alumina particles of one embodiment of the present invention have an α- phase ratio of 55.0% or less. It is known that alumina becomes a crystalline phase. As typical crystalline forms, α-alumina, θ-alumina, and δ-alumina are known. The spherical alumina particles of one embodiment of the present invention will be explained in detail later, but can be produced by running the starting material through a flame to make it melt, then cooling it as a flame melting method. By controlling the cooling speed, typically by cooling by rapid cooling, it is possible to increase the amorphous ratio in the obtained alumina and possible to easily obtain spherical alumina particles with an α- phase ratio of 55.0% or less. By control to this range, the surface of the alumina particles becomes smooth and there is the effect of maintaining high the fluidity when mixed with a resin and the amount of hard α-alumina particles becomes small, so the wear on the facilities is also low. On the other hand, if the α-phase ratio is low, the amount of α-alumina contained in the alumina particles becomes too small, so the thermal conductivity of the particles falls and the thermal conductivity of the resin composition is also liable to fall. The α- phase ratio may also be suitably adjusted so that the desired fluidity and thermal conductivity are obtained. For this reason, the lower limit of the α-phase ratio is not particularly prescribed. It may also be 0.0%, but from the viewpoint of the load in production control and the viewpoint of the thermal conductivity property as a resin composite composition, it may also be 0.1 %, may also be 0.2%, may also be 0.3 %, may also be 0.4%, may also be 0.5%, and may also be 10.0%. Further, the upper limit of the α- phase ratio may also be 50.0%, may also be 45.0%, and may also be 40.0%.

The α- phase ratio of the alumina particle powder is measured using a powder X-ray diffraction apparatus. The integral area of the obtained diffraction peaks is found. The ratio of the diffraction peak areas derived from α-alumina to the total is analyzed by the Reitveld method. Specifically, a D2PHASER made by Bruker is used to acquire the X-ray diffraction pattern in the range of 20 from 10° to 90°. The obtained pattern is analyzed by a DIFFRAC.TOPAS made by Bruker to calculate the α- phase ratio by the Reitveld method. At the time of calculation, it is assumed that only the three types of crystal phases of α-alumina, δ-alumina, and θ-alumina are present in the analysis and the content of the α-alumina is calculated.

### (Number Frequency of 10 µm or More Particles in Number of 1 µm or More and 30 µm or Less Particles Detected by Coulter Counter: 20 ppm or Less)

In one embodiment of the present invention, the spherical alumina particles may have a number frequency of 10 µm or more particles in the number of 1 µm or more and 30 µm or less particles detected by a Coulter counter of 20 ppm or less.

In this case, a Coulter counter uses the electrical resistance method referred to as the "Coulter principle" to measure particles. There is none of the errors in surface forms, internal structures, refraction indexes, color, etc. of the particles such as seen in the optical measurement method and a high measurement precision is obtained. In particular, the particle size obtained by this method can be expressed by a number distribution (/ml and /g). Precision management of the particle size distribution becomes possible.

More specifically, a 200 ml glass beaker is filled with the sample spherical alumina particles and an electrolytic solution in 150 ml. An ultrasonic homogenizer (ULTRA SONIC HOMOGENIZER UH-300 made by SMT) is used to disperse the particles for 30 seconds. Further, this dispersion is added to an electrolytic solution prepared in a separate beaker to adjust it in concentration. The dispersion adjusted in concentration is examined by a Coulter counter (Multisizer 3 made by Beckman Coulter) using an aperture size of 50 µm to measure the particle sizes of the individual spherical alumina particles. At this time, the number of particles measured per measurement is made about 100,000. The same sample is repeatedly measured three times. Among these, the number of particles with a particle size of 10 µm or more is calculated and made the frequency (ppm) of coarse particles to the total number of measurements.

By this measurement by a Coulter counter, the number frequency of 10 µm or more particles to the total number of spherical alumina particles of 1 µm or more and 30 µm or less measured may be 20 ppm or less. "20 ppm or less" is the case where, for example, when there are 100,000 1 µm or more and 30 µm or less particles, of that, there are two or less 10 µm or more particles. If the number frequency of 10 µm or more coarse particles exceeds 20 ppm, such coarse particles clog the narrow parts between the mounting board and chip, the fluidity falls, and as a result the defect rate in semiconductor products filled with these particles is liable to rise.

The greater the number frequency of 10 µm or more coarse particles, the better the fluidity, so the more preferable. On the other hand, if the number of coarse particles becomes greater, as explained above, the defect rate of the semiconductor products ends up rising. For this reason, the number frequency may be 18 ppm or less, 16 ppm or less, 14 ppm or less, 12 ppm or less, or 10 ppm or less. The number frequency of 10 µm or more coarse particles may also be 0 ppm, but completely cutting out the coarse particles, specifically rendering them 0 ppm, sometimes results in a greater load and greater difficulty in production control, so the number frequency may be several ppm, specifically 1 ppm or more, and may also be 2 ppm or more, 3 ppm or more, 4 ppm or more, or 5 ppm or more. The lower limit of the number frequency may also be adjusted in accordance with the actual application or allowable range of the target yield.

To obtain the desired particle size distribution, the particles may also be classified. For the classification, a conventional known method can be employed. For example, the method of using a sieve having a predetermined aperture size and/or precision wind classifier to cut the coarse grain side and fine grain side can be illustrated. In the classification control, the number frequency according to a Coulter counter may be measured. By precision control of the particle size distribution, the excellent properties of spherical alumina particles, for example, fluidity, can be contributed to.

### (Amount of Moisture by Karl Fischer Coulometric Method: 20 ppm or Less)

In one embodiment of the present invention, the spherical alumina particles may have an amount of moisture by the Karl Fischer coulometric method (below, also simply referred to as the "amount of moisture") of 20 ppm or less.

In this case, the Karl Fischer coulometric method is a known method of measuring an amount of moisture using a Karl Fischer reaction (reaction of iodine and water in one mole each). In a coulometric titration method, iodine ions of an electrolytic cell anolyte are electrolyzed to generate iodine. Iodine is generated proportionally to the amount of electricity, and iodine and water react 1:1, so the amount of moisture content can be found from the amount of electricity required for titration.

As a specific example, the spherical alumina particles are measured for the amount of moisture formed at 500°C or more and 900°C or less using a Karl Fischer moisture meter for coulometry.

The smaller this amount of moisture, the more agglomeration of the particles is suppressed, so the better the dispersion ability when mixing the filler with a resin and the more preferable. For this reason, this amount of moisture is preferably 20 ppm or less, more preferably 15 ppm or less, still more preferably 10 ppm or less, even more preferably less than 10 ppm.

### [Resin Composite Composition Containing Spherical Alumina Particles)

According to one embodiment of the present invention, it is possible to provide a composite composition containing the spherical alumina particles. Further, it is possible to produce a resin composite by curing the resin composite composition. The composition of the resin composite composition will be explained in more detail below.

A slurry composition containing the spherical alumina particles and a resin can be used to obtain a semiconductor sealant, interlayer insulating film, or other resin composite composition (including heat dissipation sheet or heat dissipation adhesive). Furthermore, by curing these resin composite compositions, it is possible to obtain a sealant (cured), semiconductor package board, or other resin composite.

If producing a resin composite composition, for example, in addition to the spherical alumina particles and resin, a curing agent, curing accelerator, flame retardant, silane coupling agent, etc. are mixed in along with need and a composite formed by kneading or another known method. Further, the mixture is shaped into pellets, a film, etc. in accordance with the application.

Further, if producing a resin composite composition, in addition to the spherical alumina particles and resin of one aspect of the present invention, another inorganic filler may be mixed in. As the inorganic filler, amorphous spherical silica particles, crystalline spherical silica particles, alumina particles, titania particles, magnesia particles, aluminum nitride particles, boron nitride particles, barium titanate particles, calcium titanate particles, and carbon fiber may be mentioned. The blending ratio of the inorganic filler can be suitably adjusted in accordance with the application of the resin composite composition, but from the viewpoint of obtaining the effect of the spherical silica particles of the present invention, (blended weight of spherical alumina particles):(blended weight of other inorganic fillers)=95:5 to 60:40 is preferable.

Furthermore, if curing the resin composite composition to produce a resin composite, for example, heat is applied to the resin composite composition to melt it, the composition is worked into the shape corresponding to its application, and a heat higher than the time of melting is applied to cause the composition to completely cure. In this case, the transfer mold method or other known method can be used.

For example, when producing a package board or interlayer insulating film or other semiconductor related material, as the resin used for the resin composite composition, a known resin can be used, but employing an epoxy resin is preferable. The epoxy resin is not particularly limited, but, for example, a bisphenol A type epoxy resin, bisphenol F type epoxy resin, biphenyl type epoxy resin, phenol novolac type epoxy resin, cresol novolac type epoxy resin, naphthalene type epoxy resin, phenoxy type epoxy resin, etc. can be used. It is possible to use one type among these alone or to use two types or more having different molecular weights together. Among these as well, from the viewpoint of the curability, heat resistance, etc., an epoxy resin having two or more epoxy groups in a molecule is preferable. Specifically, a biphenyl type epoxy resin, phenol novolac type epoxy resin, o-cresol novolac type epoxy resin, phenol types and aldehyde types of novolac resins which are epoxylated, bisphenol A, bisphenol F, bisphenol S, and other glycidyl ethers, glycidyl ester acid epoxy resins obtained by reaction of a phthalic acid, dioic acid, or other polybasic acid and epichlorohydrin, linear aliphatic epoxy resin, alicyclic epoxy resin, heterocyclic epoxy resin, alkyl modified polyfunctional epoxy resin, β-naphthol novolac type epoxy resin, 1,6-dihydroxynapthalene type epoxy resin, 2,7-dihydroxynapthalene type epoxy resin, bishydroxybiphenyl type epoxy resin, further an epoxy resin in which bromine or other halogen is introduced to impart flame retardance, etc. may be mentioned. Among these epoxy resins having two or more epoxy groups in a molecule, in particular a bisphenol A type epoxy resin is preferable.

Further, as the resin used for applications other than composite materials for semiconductor sealant use, for example, prepregs for printed boards, various engineering plastics, and other resin composite compositions, resins other than epoxy types can also be applied. Specifically, in addition to epoxy resins, a silicone resin, phenol resin, melamine resin, urea resin, unsaturated polyester, fluororesin, polyimide, polyamide imide, polyether imide, or other polyamide; polybutylene terephthalate, polyethylene terephthalate, or other polyester; polyphenylene sulfide, aromatic polyester, polysulfone, liquid crystal polymer, polyether sulfone, polycarbonate, maleimide modified resin, ABS resin, AAS (acrylonitrile-acryl rubber-styrene) resin, and AES (acrylonitrile-ethylene-propylene-diene rubber-styrene) resin may be mentioned.

As the curing agent usable in the resin composite composition, any curing agent known for curing a resin may be used, but, for example, a phenolic curing agent can be used. As a phenolic curing agent, a phenol novolac resin, alkylphenol novolac resin, polyvinyl phenol, etc. can be used alone or in combinations of two or more types.

The blended amount of the phenol curing agent is preferably, by equivalent ratio with the epoxy resin (phenolic hydroxy group equivalent/epoxy group equivalent), 0.1 or more and less than 1.0. Due to this, no more unreacted phenolic curing agent remains and the moisture absorption and heat resistance are improved.

The amount of addition of the spherical alumina particles of the present invention in the resin composite composition is preferably large from the viewpoint of the heat resistance and thermal expansion coefficient, but usually 70 mass% or more and 95 mass% or less, preferably 80 mass% or more and 95 mass% or less, and more preferably 85 mass% or more and 95 mass% or less are suitable. This is because if the blended amount of spherical alumina particles is too small, the effects of improvement of the strength of the sealant, suppression of thermal expansion, etc. become hard to obtain. Further, if too great, despite surface treatment of the spherical alumina particles, at the composite material, segregation easily occurs due to agglomeration of the spherical alumina particles, the viscosity of the composite material becomes too large, and other issues arise, therefore practical application as a sealant becomes difficult.

Further, in addition to a resin, an added material, for example, a silane coupling agent, curing agent, coloring agent, retardant, or other known additive, can be used.

Further, for the silane coupling agent, a known coupling agent may be used, but one having epoxy-based functional groups is preferable.

A slurry composition containing spherical alumina particles and a resin can be used to obtain a heat dissipation sheet, heat dissipation adhesive (also sometimes referred to as "heat dissipation grease"), etc.

When obtaining a heat dissipation sheet, in addition to the spherical alumina particles and resin, an additive is suitably blended and the mixture is formed into a composite by kneading or other known method. The obtained composite is shaped into a sheet by a known method.

Further, when producing a heat dissipation sheet, as the resin used for the resin composite composition, a known resin can be used, but specifically a silicone resin, phenol resin, melamine resin, urea resin, unsaturated polyester, fluororesin, polyimide, polyamide imide, polyether imide, or other polyamide; polybutylene terephthalate, polyethylene terephthalate, or other polyester; polyphenylene sulfide, aromatic polyester, polysulfone, liquid crystal polymer, polyether sulfone, polycarbonate, maleimide modified resin, ABS resin, AAS (acrylonitrile-acryl rubber-styrene) resin, and AES (acrylonitrile-ethylene-propylene-diene rubber-styrene) resin may be mentioned. Among these as well, a silicone resin is preferably used. The silicone resin is not particularly limited, but, for example, it is possible to use a peroxidation curing type, addition curing type, condensation curing type, ultraviolet curing type, etc.

Further, in addition to a resin, an added material, for example, a silane coupling agent, curing agent, coloring agent, retardant, or other known additive can be used.

When obtaining a heat dissipation adhesive or heat dissipation grease, in addition to the spherical alumina particles and resin, an additive is suitably blended and the mixture is formed into a composite by kneading or other known method. In this case, the resin used for the heat dissipation adhesive or heat dissipation grease will also be called a "base oil."

For example, when producing a heat dissipation adhesive or heat dissipation grease, as the resin used for the resin composite composition, a known resin can be applied, but specifically a silicone resin, phenol resin, melamine resin, urea resin, unsaturated polyester, fluororesin, polyimide, polyamide imide, polyether imide, or other polyamide; polybutylene terephthalate, polyethylene terephthalate, or other polyester; polyphenylene sulfide, aromatic polyester, polysulfone, liquid crystal polymer, polyether sulfone, polycarbonate, maleimide modified resin, ABS resin, AAS (acrylonitrile-acryl rubber-styrene) resin, and AES (acrylonitrile-ethylene-propylene-diene rubber-styrene) resin, mineral oil, synthetic hydrocarbon oil, ester oil, polyglycol oil, silicone oil, or fluorine oil may be mentioned.

Further, in addition to the resin, an added material, for example, a silane coupling agent, coloring agent, thickener, or other known additive can be used. As the thickener, calcium soap, lithium soap, aluminum soap, calcium complex, aluminum complex, lithium complex, barium complex, bentonite, urea, PTFE, sodium terephthalate, silica gel, organic bentonite, or other known ones can be used.

### [Method of Production of Spherical Alumina Particles]

In one embodiment of the present invention, a method of production of spherical alumina particles is provided. The method of production is a method enabling suitable production of the above-mentioned alumina particles and includes the following steps:
(1) a step of running at least one of alumina, boehmite, and aluminum hydroxide into a flame to make it melt, then cooling it to spheroidize it and
(2) a step of classification after the spheroidization step using a precision wind classifier and/or sieve.

The spheroidization step of (1) is a step of running the starting material through a flame to make it melt, then cooling it. The starting material can be run through the flame in a state carried in a carrier gas. As the carrier gas, air, oxygen, propane gas, etc. can be employed. The method of forming the flame is not particularly limited, but it is possible to form a flame by supplying a burner with a fuel (propane etc.) for forming the flame by a separate route from the introduction of the starting material, to form a flame by premixing a fuel and auxiliary gas (air or oxygen) and supplying it to a burner, and to form a flame by mixing the starting material, fuel, and auxiliary gas and supplying it to a burner. The flame is preferably formed inside a heat resistant furnace. It is preferable to form a flame above the heat resistant furnace, supply the starting material into the flame, allow the alumina particle material formed to descend by gravity, and recover it from below. By not forming a flame below the heat resistant furnace, the alumina powder precipitating downward is cooled to form particles. If possible to add an amount of heat sufficient for melting to the starting material particles at the time of spheroidization, it is possible to reduce the amount of irregularly shaped particles not made spheroidal and possible to increase the bulk specific gravity. At that time, it is possible to adjust the roundness and bulk specific gravity by the amount of starting material supplied to the flame per time or the type of fuel gas. Further, by adjusting the particle size of the starting material powder used, it is possible to adjust the particle size of the particles after spheroidization.

The starting material of the spherical alumina particles includes at least one of alumina, boehmite, and aluminum hydroxide. When the starting material is run through the flame, the alumina remains as alumina, while the boehmite or aluminum hydroxide is converted to alumina by oxidation or a dehydration reaction. Further, the content of α-alumina can be raised by holding the temperature in the melting furnace high. The temperature inside the melting furnace is preferably 1200°C or more from the viewpoint of promoting the crystal growth of the α-alumina. Further, by rapidly cooling the spherical particles right after solidifying by air, water, or another refrigerant, it is possible to lower the content. The refrigerant is not particularly limited, but from the viewpoint of not causing the purity of the spherical particles to fall, distilled water or ion exchanged water not containing air or sodium ions or chlorine ions etc. as impurities is preferable.

In the classification step of (2), the spherical alumina particles obtained in the spheroidization step can be classified using a sieve having a predetermined aperture size and/or precision wind classifier to suitably produce the above-mentioned alumina particles. In accordance with need, it is also possible to use a cyclone etc. to separate the coarse grains and fine grains in pretreatment or post-treatment. Due to this step, it is possible to obtain the desired particle size, particle size distribution, specific surface area, and bulk specific gravity.

### (Regarding Thermal Conductivity or Fluidity of Spherical Alumina Particles)

The thermal conductivity and fluidity (viscosity) of the spherical alumina particles themselves are difficult to measure. Therefore, for the thermal conductivity, the thermal conductivity of the resin composition obtained by mixing the spherical alumina particles with a resin under predetermined conditions is measured and the thermal conductivity of the spherical alumina particles is evaluated based on the measurement results. Further, for the fluidity (viscosity) as well, the fluidity (viscosity) of the resin composition obtained by mixing the spherical alumina particles with a resin under predetermined conditions is measured and the fluidity (viscosity) of the spherical alumina particles is evaluated based on the measurement results.

### <Measurement of Thermal Conductivity>

More specifically, the following procedure is used to measure the thermal conductivity. Spherical alumina particles in 88 parts by mass, the silicone resin A (CY-52-276A made by Toray Dow Corning Co., Ltd.) in 6 parts by mass, and the silicone resin B (CY-52-276B made by Toray Dow Corning Co., Ltd.) in 6 parts by mass are mixed by a vacuum kneader, the obtained resin composition is poured into a mold, and the composition is heated and pressed for shaping so as to give any thickness. The shaping conditions are heating at a pressure of 6 MPa and 120°C temperature for 1 hour. After heating, the shaped sheet is taken out from the mold and post-heated at a 140°C dryer. The post-heated sheet is cooled. The prepared sheet is cut out to a 20 mm square and measured for thermal conductivity using the ASTM-D5470 method under conditions of a pressure of 1.25 kgf/cm².

In an example using spherical alumina particles according to the present embodiment, if the amount of filler applied is 88 wt%, the lower limit of the thermal conductivity may be 1.40W/m·K, preferably may be 1.60W/m·K. On the other hand, the upper limit of the thermal conductivity may be 2.50, preferably may be 2.00W/m·K.

Further, if the filler is at the maximum added amount of 89 wt%, the lower limit of the thermal conductivity may be 1.70W/m·K. On the other hand, the upper limit of the thermal conductivity may be 2.50W/m·K.

### <Measurement of Flow Rate>

More specifically, the following procedure is used to measure the flow rate. Spherical alumina particles in 80 parts by mass and an epoxy resin (Epicoat 801N) in 20 parts by mass are mixed by a kneader. The obtained resin composition is allowed to cool in a water bath for 60 minutes, then is measured by a Flow Tester CFT-500D made by Shimadzu Corporation. About 10 ml of the kneaded sample is extruded from a die of a diameter of 2.0 mm and length of 75.0 mm set to 28.5°C. The extrusion load is made 50.0 kgf. The extrusion speed (ml/sec) is measured from the point of time of extruding about 50% of the sample to completion of extrusion of 75%.

In examples using the spherical alumina particles according to the present embodiment, the lower limit of the flow rate may be 0.2 ml/sec, preferably may be 0.28 ml/sec. On the other hand, the upper limit may be 1.0 ml/s. This is because if the flow rate is too low, when used as a sealant, it becomes a cause of poor sealing. Further, even when used as an adhesive, grease, or other liquid heat dissipation material, the fluidity becomes insufficient and becomes a cause of worsening work efficiency. On the other hand, if the flow rate is too high, when used as a sealant, the material will leak out from the gaps in the mold causing the formation of burrs. Even when used as a liquid heat dissipation material, the material ends up leaking out from the coated object resulting in worsening work efficiency.

### EXAMPLES

The present invention will be explained through the following examples and comparative examples. However, the present invention is not to be interpreted limited to the following examples.

### <Examples 1 to 12>

An alumina particle starting material was run through a high temperature flame formed by LPG and oxygen to spheroidize it. The particle size of the alumina particle starting material run was controlled to produce spherical alumina particles. The flame forming conditions, starting material particle size, amount of starting material supplied, classification conditions, etc. were adjusted to produce alumina particles having the physical property values shown in Table 1. Specifically, the particle size distribution was adjusted by adjusting the starting material particle size and by a multistage sieving operation and classification operation after a spheroidization operation. As final steps, in Examples 1, 2, 4, 5, 6, and 7, a sieve set with a 20 µm screen was used for classification, while otherwise a precision classifier was used for classification.

### <Comparative Example 1>

As a final step, unlike Examples 1 to 12, a sieve set with a 75 µm screen was used for classification. The rest of the method of production was similar to the examples.

### <Comparative Example 2>

The starting material metal aluminum powder (D50=20 µm) was supplied into a high temperature flame formed by combustion of LPG and oxygen using air as a carrier gas so as to oxidize and spheroidize it and produce the spherical alumina particles described in the comparative examples of Table 1. The steps from the spheroidization and on were similar to the examples using a precision classifier as a final step.

### <Comparative Example 3>

The particle size of the starting material powder used at the time of the spheroidization step was adjusted to produce spherical alumina particles with more coarse particles than Examples 1, 4, and 5. The rest of the method of production was similar to the examples of classification by a 20 µm screen.

### <Comparative Example 4>

The operation of increasing the amount of starting material run through the flame per unit time at the time of the spheroidization step was used to lower the bulk density. The other steps include a classification step similar to Examples 1, 2, 4, 5, 6, and 7 to produce spherical alumina particles described in the comparative examples.

Table 1 shows the values of the physical properties of the spherical alumina particles used. It should be noted that in each of Example 1 to Example 12, the amount of moisture by the Karl Fischer coulometric method was less than 10 ppm. Further, in each of Example 1 to Example 12, the thermal conductivity with an amount of filler used of 88 wt% was 1.7 to 2.0W/m·K.

**Table 1]**

| | Unit | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 |
|---|---|---|---|---|---|---|---|---|---|---|---|---|---|
| Average particle size | um | 8.5 | 5.2 | 3.7 | 7.7 | 9.1 | 4.7 | 5.1 | 3.7 | 3.8 | 1.5 | 0.9 | 4.4 |
| Specific surface area | m²/g | 0.48 | 0.72 | 0.76 | 0.53 | 0.44 | 0.77 | 0.62 | 0.84 | 0.69 | 2.05 | 3.22 | 0.69 |
| Roundness | - | 0.96 | 0.95 | 0.96 | 0.96 | 0.96 | 0.95 | 0.97 | 0.95 | 0.97 | 0.91 | 0.92 | 0.98 |
| Poured bulk density (loose bulk specific gravity) | g/ml | 1.39 | 0.76 | 1.00 | 1.38 | 1.43 | 0.74 | 1.03 | 0.92 | 1.04 | 0.72 | 0.78 | 0.98 |
| Tapped bulk density (tight bulk specific gravity) | g/ml | 2.36 | 2.01 | 2.07 | 2.33 | 2.38 | 1.95 | 2.16 | 1.98 | 2.12 | 1.67 | 1.46 | 1.07 |
| α- phase ratio | % | 50.4 | 43.5 | 32.1 | 48.7 | 51.4 | 46.5 | 42.4 | 33.8 | 35.9 | 6.4 | 0.61 | 36.4 |
| Ratio of 20 um or more particles by wet type particle size test method | % | 0.00 | 0.00 | 0.00 | 0.00 | 0.02 | 0.00 | 0.00 | 0.00 | 0.00 | 0.00 | 0.00 | 0.00 |
| Ratio of 10 um or more particles by Coulter counter method | ppm | - | - | 8.9 | - | - | - | - | 6.0 | 13.3 | 0.0 | 0.0 | 390.0 |
| Flow rate | ml/s | 0.96 | 0.47 | 0.64 | 0.74 | 1 | 0.28 | 0.96 | 0.5 | 0.71 | 0.29 | 0.31 | 0.57 |

| | | Unit | | Comp. Ex. 1 | | Comp. Ex. 2 | | Comp. Ex. 3 | | | Comp. Ex. 4 | | |
|---|---|---|---|---|---|---|---|---|---|---|---|---|---|
| Average particle size | | um | | 10.8 | | 0.4 | | 9.3 | | | 0.8 | | |
| Specific surface area | | m²/g | | 0.45 | | 5.90 | | 0.40 | | | 3.21 | | |
| Roundness | | - | | 0.94 | | 0.96 | | 0.91 | | | 0.94 | | |
| Poured bulk density (loose bulk specific gravity) | | g/ml | | 1.87 | | 0.19 | | 1.79 | | | 0.61 | | |
| Tapped bulk density (tight bulk specific gravity) | | g/ml | | 2.53 | | 0.39 | | 2.52 | | | 1.26 | | |
| α- phase ratio | | % | | 61.3 | | 0.34 | | 54.2 | | | 0.83 | | |
| Ratio of 20 um or more particles by wet type particle size test method | | % | | 13.40 | | 0.00 | | 0.08 | | | 0.00 | | |
| Ratio of 10 um or more particles by Coulter counter method | | ppm | | - | | 12.4 | | - | | | - | | |
| Flow rate | | ml/s | | 1.3 | | Not measurable | | 1.1 | | | Not measurable | | |

The methods of measurement of the values of the physical properties are described below:

### (Average Particle Size D50)

A laser diffraction/scattering type particle size distribution measurement apparatus "Mastersizer 3000" (made by Malvern) was used to measure the average particle size (D50).

### (Particle Size Distribution Measured by Wet Type Particle Size Test Method)

In the wet type particle size test method, a container was filled with 10 g of the spherical alumina particles to be tested and water. Ultrasonic waves were used to make the spherical particles sufficiently disperse to prepare a slurry. The slurry was transferred onto a screen of a test sieve and was sieved. The particles remaining on the screen of the test sieve were taken into a suitable container, the sample was evaporated to dryness on a hot plate etc., the weight of the residue was measured, and the ratio of the weight of the particles sieved out in 10 g of the spherical alumina particles being tested was calculated.

### (Specific Surface Area)

The specific surface area was measured by the BET method. Specifically, the following procedure was used to measure the specific surface area. About 5 g of the sample was measured out and was dried in vacuo at 250°C for 5 minutes. Next, the sample was set in an automatic specific surface area measurement apparatus (Macsorb made by Mountech) and a pure nitrogen and nitrogen-helium mixed gas (mixed ratio of nitrogen 30%, He70%) was used to measure the value of the nitrogen gas adsorption at a 77K measurement temperature and relative pressure P/P0 of 0.291. The one-point method was used to calculate the BET specific surface area.

### (Tapped Bulk Density)

A Powder Tester PT-X made by Hosokawa Micron was used for measurement. As the measurement container, a stainless steel 50 ml container of known mass was used. First, the measurement container was packed with the powder sample until overflowing. The powder built up from the top end face of the measurement container was sliced off using a slicing plate. The mass of the container and the filled powder combined was measured and the mass of the container was subtracted from the measured mass to find the mass of the filled powder. Next, an adapter was attached to the top surface of the measurement container, then the sample was inserted until overflowing from the top surface of the adapter. The measurement container in the state with the adapter attached was placed in the tap apparatus and tapped 180 times to compact the powder. After compaction, the adapter was removed and the built up powder was sliced off from the top end face of the measurement container by a slicing plate. The mass of the container and the filled powder combined was measured and the mass of the container was subtracted from the measured mass to find the mass of the filled powder. The mass of the sample was divided by the volume of the container to find the tapped bulk density (tight bulk density). Further, the mass of the sample was divided by the volume of the measurement container (specifically, the volume of the sample before tapping) to find the poured bulk density (loose bulk density).

### (Roundness)

The roundness was measured using an electron microscope or optical microscope and image analysis apparatus. In the examples and comparative examples, an FPIA made by Sysmex Corporation was used. These apparatuses were used to measure the roundness of the particles (circumferential length of equivalent circle/circumferential length of projected image of particles). The roundness was measured for 100 or more particles and the average value was made the roundness of the powder.

### (α-phase Ratio)

The α- phase ratio was measured using a powder X-ray diffraction apparatus. The integral area of the obtained diffraction peaks was found. The ratio of the diffraction peak areas derived from α-alumina to the total was analyzed by the Reitveld method. Specifically, a D2PHASER made by Bruker was used to acquire the X-ray diffraction pattern in the range of 2θ from 10° to 90°. The obtained pattern was analyzed by a DIFFRAC.TOPAS made by Bruker to calculate the α- phase ratio by the Reitveld method. At the time of calculation, it was assumed that only the three types of crystal phases of α-alumina, δ-alumina, and θ-alumina were present in the analysis and the content of the α-alumina was calculated.

### (Measurement by Coulter Counter Method)

A 200 ml glass beaker was filled with the sample spherical alumina particles and an electrolytic solution 150 ml. An ultrasonic homogenizer (ULTRA SONIC HOMOGENIZER UH-300 made by SMT) was used to disperse the particles for 30 seconds. Further, this dispersion was added to an electrolytic solution prepared in a separate beaker to adjust it in concentration. The dispersion adjusted in concentration was examined by a Coulter counter (Multisizer 3 made by Beckman Coulter) using an aperture size of 50 µm to measure the particle sizes of the individual spherical alumina particles. At this time, the number of particles measured per measurement was made about 100,000. The same sample was repeatedly measured three times. Among these, the number of particles with a particle size of 10 µm or more was calculated and made the frequency (ppm) of coarse particles to the total number of measurements.

### <Measurement of Flow Rate>

More specifically, the following procedure was used to measure the flow rate. Spherical alumina particles in 88 parts by mass and an epoxy resin (Epicoat 801N) in 20 parts by mass were mixed by a kneader. The obtained resin composition was allowed to cool in a water bath for 60 minutes, then was measured by a Flow Tester CFT-500D made by Shimadzu Corporation. About 10 ml of the kneaded sample was extruded from a die of a diameter of 2.0 mm and length of 75.0 mm set to 28.5°C. The extrusion load was made 50.0 kgf. The extrusion speed (ml/sec) was measured from the point of time of extruding about 50% of the sample to completion of extrusion of 75%.

### <Measurement of Thermal Conductivity>

The following procedure was used to measure the thermal conductivity. Spherical alumina particles in 80 parts by mass, a silicone resin A (CY-52-276A made by Toray Dow Corning) in 6 parts by weight, and a silicone resin B (CY-52-276B made by Toray Dow Corning) in 6 parts by weight were mixed by a vacuum kneader. The obtained resin composition was poured into a mold and shaped under heat and pressure so as to give any thickness. The shaping conditions were heating for 1 hour by a pressure of 6 MPa and a temperature of 120°C. After heating, the shaped sheet was taken out from the mold and post heated by a 140°C dryer. The post heated sheet was cooled. The prepared sheet was cut to 20 mm square and measured for thermal conductivity using the ASTM-D5470 method under conditions of a pressure of 1.25 kgf/cm².

### <Measurement of Amount of Moisture by Karl Fischer Coulometric Method>

The following procedure was used to measure the amount of moisture by the Karl Fischer coulometric method. The spherical alumina particles in an amount of 0.5 to 1.0 gram were set in a Karl Fischer moisture meter for coulometry (CA-200 (measurement apparatus), VA-122 (vaporization apparatus) made by Nittoseiko Analytech), raised in temperature from 25°C to 500°C and held at 500°C, and checked to see if moisture was no longer generated. After that, it was further raised in temperature and the amount of moisture generated at 500°C or more and 900°C or less was measured.

It was confirmed that a good fluidity and thermal conductivity are obtained in the spherical alumina particles in the scope of the present invention.

### [INDUSTRIAL APPLICABILITY]

The spherical alumina particles of the present invention and the resin composite composition including the same exhibit excellent fluidity and thermal conductivity and are not limited to a semiconductor sealing material and can be also used for other applications. Specifically, use as a heat dissipation sheet, heat dissipation adhesive, etc. can also possible. Further, according to the method of production of spherical alumina particles according to the present invention, it is possible to obtain the above spherical alumina particles.

## Claims

1. Spherical alumina particles having
a D50 by a laser diffraction/scattering method of 0.5 or more and 10.0 µm or less,
a particle size distribution, measured by a wet sieving test method, in which 20.0 µm or more particles account for 0.04 wt% or less,
a specific surface area, measured by a BET method, of 0.35 m²/g or more and 3.50 m² /g or less,
a "tapped bulk density," prescribed by Japan Industrial Standard JISR1628:1997, of 1.30 g/cm³ or more and 2.50 g/cm³ or less, and
a roundness of 0.90 or more.

2. The spherical alumina particles according to claim 1, wherein an α- phase ratio is 55% or less.

3. The spherical alumina particles according to claim 1, wherein in the number of particles of 1 µm or more and 30 µm or less detected by a Coulter counter, a 10 µm or more particle number frequency is 20 ppm or less.

4. The spherical alumina particles according to claim 1, wherein an amount of moisture by the Karl Fischer coulometric method is 20 ppm or less.

5. A resin composite composition containing spherical alumina particles according to any one of claims 1 to 4.

6. The resin composite composition according to claim 5, further containing at least one type of inorganic filler selected from amorphous spherical alumina particles, crystalline spherical silica particles, alumina particles, titania particles, magnesia particles, aluminum nitride particles, boron nitride particles, barium titanate particles, calcium titanate particles, and carbon fiber.

7. A method of production of spherical alumina particles having a D50 by a laser diffraction/scattering method of 0.5 or more and 10.0 µm or less, a particle size distribution, measured by a wet sieving test method, in which 20.0 µm or more particles account for 0.04 wt% or less, a specific surface area, measured by a BET method, of 0.35 m²/g or more and 3.50 m² /g or less, a "tapped bulk density", prescribed by Japan Industrial Standard JISR1628:1997, of 1.30 g/cm³ or more and 2.50 g/cm³ or less, and a roundness of 0.90 or more **characterized by** having a step of running at least one of alumina, boehmite, or aluminum hydroxide through a flame to make it melt, then cooling it to thereby make it spheroidal and a step of classification jointly using a precision wind classifier and sieve after the spheroidization step.
